# FASCICULE DE BREVET EUROPEEN

(11) **EP 3 574 765 B1**
(45) Date de publication et mention de la délivrance du brevet: **27.01.2021**
(21) Numéro de dépôt: 19173796.4
(22) Date de dépôt: 10.05.2019
(51) Int. Cl.: A23C 9/12, B65D 81/34

(54) **ACCESSOIRE DE SUPPORT ET APPAREIL ELECTRIQUE POUR CHAUFFER DES ALIMENTS EN PORTIONS SEPAREES**
STÜTZZUBEHÖR UND ELEKTRISCHE VORRICHTUNG ZUR ERHITZUNG VON LEBENSMITTELN IN EINZELNEN PORTIONEN
SUPPORT ACCESSORY AND ELECTRICAL APPARATUS FOR HEATING FOOD IN SEPARATE PORTIONS

(30) Priorité: 28.05.2018 FR 1854493
(43) Date de publication de la demande: 04.12.2019
(73) Titulaire: SEB S.A., 69130 Ecully (FR)
(72) Inventeur: FIEDOS, Hervé, 65310 ODOS (FR); TOMPA, Carole, 65000 TARBES (FR); SMIT, Robert, 65290 LOUEY (FR)
(74) Mandataire: SEB Développement

(56) Documents cités:
- WO-A1-2008/065807
- FR-A1- 2 956 291
- DATABASE WPI Week 201826 Thomson Scientific, London, GB; AN 2018-27058C XP002788176, -& CN 207 168 383 U (ZHEJIANG KANGJIABAO COOKWARE CO LTD) 3 avril 2018 (2018-04-03)

## Description

La présente invention concerne le domaine technique des dispositifs de chauffe d'aliments en portions séparées.

La présente invention concerne un appareil électrique pour chauffer des aliments en portions séparées, notamment une yaourtière, qui comporte un accessoire de support prévu pour être placé sur une base chauffante pour porter des récipients à distance de la base chauffante.

Le document FR1048525 divulgue un appareil de type yaourtière comportant un support de récipients prévu pour être placé sur une base chauffante pour porter des récipients à distance de la base chauffante. Le document WO2011/144870 divulgue un appareil électrique pour chauffer des aliments en portions séparées, notamment pour réaliser des yaourts ou des entremets, comportant un support de récipients du type précité. Ce document envisage de réaliser des yaourts en mode chaleur sèche, ou des entremets en mode chaleur humide, c'est-à-dire en utilisant de la vapeur. La base chauffante présente une cavité recevant de l'eau en vue de sa transformation en vapeur pour chauffer les récipients. Les deux récipients centraux sont agencés au-dessus de la cavité. Un inconvénient de la réalisation présentée dans ce document est que les écarts de température entre les récipients sont trop importants pour envisager de réaliser des yaourts en mode chaleur humide. Les deux récipients centraux sont soumis à des températures trop élevées pour pouvoir réaliser des yaourts de manière satisfaisante.

Un objet de la présente invention est de proposer un appareil électrique pour chauffer des aliments en portions séparées, notamment une yaourtière, comportant un accessoire de support prévu pour être placé sur une base chauffante produisant de la vapeur, pour porter des récipients à distance de la base chauffante, qui permette d'améliorer l'homogénéité de chauffe des récipients portés par l'accessoire de support.

Ces objets sont atteints avec un appareil électrique pour chauffer des aliments en portions séparées, comprenant une base chauffante comportant un dispositif de production de vapeur, des récipients pour contenir les aliments à chauffer, et un accessoire de support pour suspendre les récipients de sorte que le fond de chaque récipient soit distant de la base chauffante lorsque la base chauffante porte l'accessoire de support, la base chauffante et l'accessoire de support formant une enceinte susceptible de contenir de la vapeur issue du dispositif de production de vapeur, l'accessoire de support comprenant une surface supérieure présentant plusieurs orifices, chaque orifice traversant l'accessoire de support, chaque orifice étant entouré par un bord supérieur d'appui, chaque bord supérieur d'appui étant prévu pour suspendre un récipient, du fait que les bords supérieurs d'appui s'étendent à différents niveaux de la surface supérieure. En d'autres termes, au moins un des bords supérieurs d'appui est surélevé par rapport aux autres bords supérieurs d'appui. Cette disposition permet d'éloigner davantage le fond de certains des récipients de la partie inférieure de l'accessoire de support, ce qui permet de réduire les écarts de température entre les récipients lorsque les récipients sont chauffés par de la vapeur produite en dessous de l'accessoire de support sous une partie seulement de la surface supérieure.

Ces dispositions permettent d'obtenir un appareil électrique pour chauffer des aliments en portions séparées, dans lequel la chauffe des récipients à la vapeur peut être réalisée avec des écarts de température limités entre les récipients, sans nécessiter un dispositif de production de vapeur présentant une répartition homogène sous les récipients.

Avantageusement alors, les orifices comprennent des orifices périphériques et au moins un orifice central entouré par les orifices périphériques. Cette disposition permet de réaliser un accessoire de support comportant des récipients répartis sur au moins trois lignes selon deux directions différentes.

Avantageusement encore, le bord supérieur d'appui de l'orifice central ou de l'un au moins des orifices centraux est surélevé par rapport aux bords supérieurs d'appui des orifices périphériques. Ainsi les récipients peuvent être chauffés par de la vapeur produite en dessous de la portion centrale de l'accessoire de support, en conservant des écarts de température acceptables entre les récipients.

Avantageusement encore, les orifices comprennent au moins six orifices périphériques entourant au moins un orifice central, et de préférence dix orifices périphériques entourant deux orifices centraux.

Avantageusement encore, les orifices comprennent des orifices inférieurs et au moins un orifice supérieur, le bord supérieur d'appui du ou de chaque orifice supérieur étant surélevé par rapport au bord supérieur d'appui de chaque orifice inférieur. Cette disposition permet d'éloigner davantage le fond de certains des récipients de la partie inférieure de l'accessoire de support, ce qui permet de réduire les écarts de température entre les récipients lorsque les récipients sont chauffés par de la vapeur produite en dessous de l'accessoire de support sous une partie seulement de la surface supérieure de l'accessoire de support.

Avantageusement alors, l'accessoire de support pour la réalisation de préparations culinaires en portions séparées comprend un corps principal présentant les orifices inférieurs et un rehausseur présentant ledit au moins un orifice supérieur. Ainsi la surface supérieure de l'accessoire de support est répartie entre le corps principal et le rehausseur.

Avantageusement alors, le corps principal présente la majorité des orifices. Cette disposition permet de réduire les écarts de température entre les récipients lorsque les récipients sont chauffés par de la vapeur produite en dessous de l'accessoire de support sous une partie réduite de la surface supérieure de l'accessoire de support.

Avantageusement encore, le rehausseur est monté amovible par rapport au corps principal. Cette disposition permet de simplifier la construction de l'accessoire de support. Cette disposition permet également d'envisager l'utilisation du corps principal en l'absence du rehausseur.

Avantageusement alors, le corps principal présente au moins un orifice complémentaire entouré par un bord supérieur d'appui complémentaire prévu pour suspendre un récipient lorsque le rehausseur n'est pas en place sur le corps principal. Cette disposition permet d'utiliser le corps principal avec davantage de récipients en l'absence du rehausseur.

Avantageusement alors, le rehausseur repose sur le bord supérieur d'appui complémentaire lorsque le rehausseur est en place sur le corps principal. Cette disposition permet de simplifier le montage du rehausseur sur le corps principal.

Avantageusement encore, le rehausseur présente une protubérance prévue pour être engagée dans une échancrure ménagée dans le bord supérieur d'appui complémentaire lorsque le rehausseur est en place sur le corps principal. Cette disposition permet d'éviter le montage du rehausseur dans un autre orifice que ledit orifice complémentaire.

Avantageusement alors, le corps principal comporte deux orifices complémentaires présentant chacun un bord supérieur d'appui complémentaire présentant une échancrure, et le rehausseur présente deux protubérances prévues chacune pour être engagée dans l'une des échancrures lorsque le rehausseur est en place sur le corps principal. Cette disposition permet de simplifier le montage du rehausseur sur le corps principal.

Avantageusement alors, le dispositif de production de vapeur comprend une cavité prévue pour recevoir de l'eau, un dispositif de chauffe pour porter à ébullition l'eau contenue dans la cavité, la cavité étant ménagée dans l'enceinte, le ou l'un au moins des orifices supérieurs étant agencé au moins partiellement au-dessus de la cavité, et de préférence principalement ou entièrement au-dessus de la cavité. Cette disposition permet de faciliter le remplissage de l'eau utilisée dans le dispositif de production de vapeur.

Avantageusement encore, l'appareil électrique pour chauffer des aliments en portions séparées forme une yaourtière. Ce type d'appareil permet de chauffer la préparation alimentaire contenue dans les récipients pour réaliser un processus de fermentation de ladite préparation alimentaire, avec des écarts de température limités entre les récipients, sans nécessiter un dispositif de production de vapeur présentant une répartition homogène sous les récipients.

L'invention sera mieux comprise à l'étude d'un exemple de réalisation, pris à titre nullement limitatif, illustré dans les figures annexées, dans lesquelles :
- la figure 1 est une vue en perspective éclatée d'un exemple de réalisation d'un appareil électrique pour chauffer des aliments en portions séparées comportant un accessoire de support pour la réalisation de préparations culinaires en portions séparées selon l'invention,
- la figure 2 est une vue en perspective de dessus d'un corps principal ajouré, appartenant à l'accessoire de support pour la réalisation de préparations culinaires en portions séparées selon l'invention illustré sur la figure 1,
- la figure 3 est une vue partielle en perspective selon une autre orientation du corps principal ajouré illustré sur la figure 2,
- la figure 4 est une vue en perspective de dessous d'un rehausseur appartenant à l'accessoire de support pour la réalisation de préparations culinaires en portions séparées selon l'invention illustré sur la figure 1,
- La figure 5 est une vue en perspective de l'accessoire de support pour la réalisation de préparations culinaires en portions séparées selon l'invention en configuration assemblée,
- La figure 6 est une vue en élévation et en coupe longitudinale de l'appareil électrique pour chauffer des aliments en portions séparées illustré sur la figure 1, comportant l'accessoire de support pour la réalisation de préparations culinaires en portions séparées selon l'invention en configuration assemblée illustré sur la figure 5.

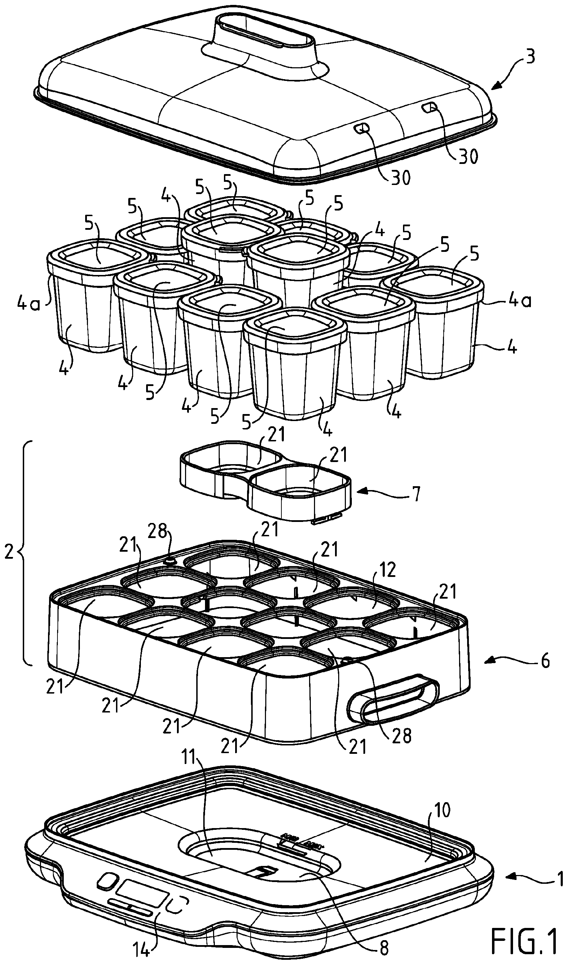

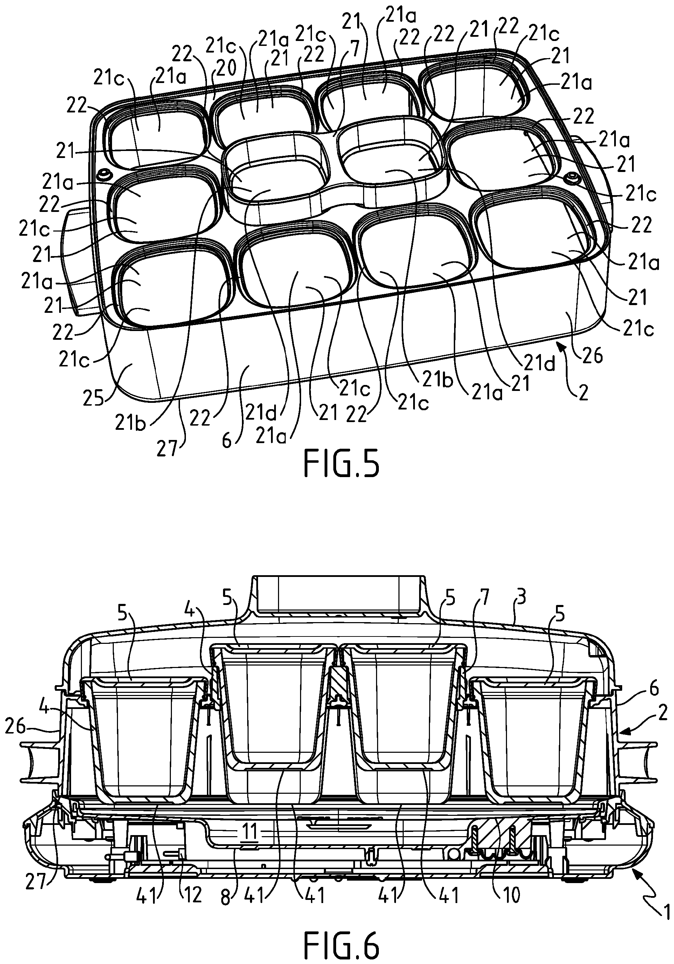

L'appareil électrique pour chauffer des aliments en portions séparées illustré sur les figures 1 et 6 comprend une base chauffante 1, un accessoire de support 2 pour la réalisation de préparations culinaires en portions séparées, et des récipients 4 pour contenir les aliments à chauffer. L'accessoire de support 2 est conçu pour suspendre les récipients 4 de sorte que le fond 41 de chaque récipient 4 soit distant de la base chauffante 1 lorsque la base chauffante 1 porte l'accessoire de support 2. A cet effet, chaque récipient 4 comprend un épaulement 4a au voisinage d'un bord supérieur du récipient 4.

Si désiré chacun des récipients 4 peut être associé à un couvercle 5. Tel que représenté sur la figure 6, l'accessoire de support 2 repose sur la base chauffante 1.

L'appareil électrique pour chauffer des aliments en portions séparées illustré sur les figures 1 et 6 comprend un couvercle principal 3 reposant sur l'accessoire de support 2. Ainsi l'accessoire de support 2 est intercalé entre la base chauffante 1 et le couvercle principal 3. L'accessoire de support 2 entoure les récipients 4 sur la majeure partie de la hauteur des récipients 4. A titre de variante, le couvercle principal 3 pourrait notamment reposer sur la base chauffante 1 autour de l'accessoire de support 2. Ainsi, selon l'une ou l'autre de ces configurations, la base chauffante 1 porte le couvercle principal 3 et le couvercle principal 3 ménage une chambre s'étendant au-dessus des récipients 4 portés par l'accessoire de support 2.

La base chauffante 1 comporte un dispositif de production de vapeur 8. La base chauffante 1 et l'accessoire de support 2 formant une enceinte 9 susceptible de contenir de la vapeur issue du dispositif de production de vapeur 8. La partie inférieure des récipients 4 portés par l'accessoire de support 2 s'étend dans l'enceinte 9.

Dans l'exemple de réalisation illustré sur les figures 1 et 6, le dispositif de production de vapeur 8 comprend une cavité 11 prévue pour recevoir de l'eau. La cavité 11 forme un réservoir d'eau. La cavité 11 est dimensionnée pour recevoir une quantité calibrée de liquide. Le dispositif de production de vapeur 8 comprend un dispositif de chauffe 12 pour porter à ébullition l'eau contenue dans la cavité 11. La cavité 11 est ménagée dans l'enceinte 9.

Si désiré, l'accessoire de support 2 et/ou le couvercle principal 3 peuvent comporter un ou plusieurs orifices d'échappement de vapeur 28 ; 30.

Plus particulièrement dans l'exemple de réalisation illustré sur les figures 1 et 6, la base chauffante 1 comprend une plaque métallique 10 associée au dispositif de chauffe 12. La plaque métallique 10 s'étend en dessous du fond 41 des récipients 4. La plaque métallique 10 est avantageusement réalisée en aluminium, pour assurer une répartition homogène de la température sur toute la surface de la plaque métallique 10. La plaque métallique 10 est de préférence réalisée en aluminium moulé. Le dispositif de chauffe 12 est formé par un élément chauffant blindé fixé sous la plaque métallique 10 autour de la périphérie de la cavité 11. Ainsi le dispositif de chauffe 12 est disposé dans la partie centrale de la plaque métallique 10. La base chauffante 1 comprend en outre un panneau de commande 14 et un dispositif de commande associé pour piloter l'alimentation électrique du dispositif de chauffe 12. Si désiré, l'appareil électrique pour chauffer des aliments en portions séparées illustré sur les figures 1 et 6 peut comprendre des moyens de commande assurant le fonctionnement du dispositif de chauffe 12 selon un premier mode limitant la température de la plaque métallique 10 en-dessous de 100°C et selon un deuxième mode autorisant une température de la plaque métallique 10 supérieure à 100°C.

L'appareil électrique pour chauffer des aliments en portions séparées illustré sur les figures 1 et 6 forme une yaourtière. Les aliments à chauffer dans les récipients 4 sont des préparations alimentaires à base de lait et de ferments lactiques. Le dispositif de commande conçu pour éviter que les températures des préparations à base de lait et de ferments lactiques contenues dans les récipients 4 ne dépassent un niveau de température susceptible de dégrader les ferments lactiques, usuellement de l'ordre de 50°C. Le dispositif de commande peut notamment alimenter le dispositif de chauffe 12 de manière à produire rapidement de la vapeur dans une phase initiale de chauffe, afin de commencer à élever la température des récipients 4 puis de la préparation alimentaire contenue dans les récipients 4, puis dans une phase ultérieure de chauffe à produire de la vapeur avec un débit moindre que dans la phase initiale de chauffe, afin d'augmenter plus graduellement la température des récipients 4 et la température de la préparation alimentaire contenue dans les récipients 4.

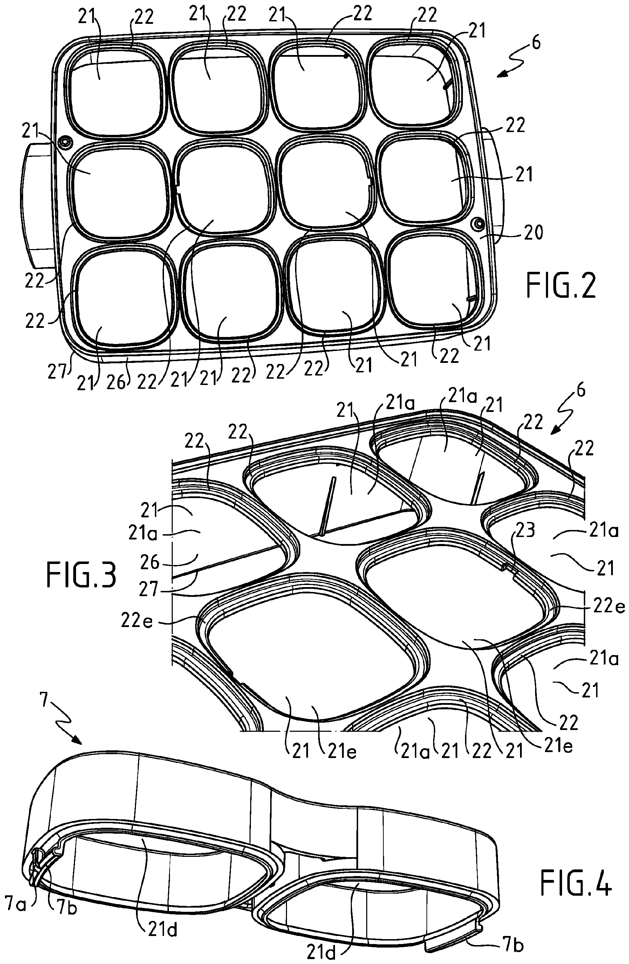

Tel que visible sur la figure 5, l'accessoire de support 2 pour la réalisation de préparations culinaires en portions séparées selon l'invention comprend une surface supérieure 20 présentant plusieurs orifices 21. Chaque orifice 21 est entouré par un bord supérieur d'appui 22. Chaque bord supérieur d'appui 22 est prévu pour suspendre un récipient 4, de sorte que le fond 41 de chaque récipient 4 s'étende dans l'enceinte 9 lorsque l'accessoire de support 2 est disposé sur la base chauffante 1. Tel que visible sur la figure 5, les bords supérieurs d'appui 22 s'étendent à différents niveaux de la surface supérieure 20. Plus particulièrement dans l'exemple de réalisation illustré sur les figures, les bords supérieurs d'appui 22 sont agencés sur un premier niveau et sur un deuxième niveau supérieur au premier niveau. Tel que bien visible sur les figures 2 à 5, les orifices 21 traversent l'accessoire de support 2.

Les orifices 21 comprennent des orifices périphériques 21a et au moins un orifice central 21b entouré par les orifices périphériques 21a. Les orifices 21 comprennent au moins six orifices périphériques 21a entourant au moins un orifice central 21b. Le bord supérieur d'appui 22 de l'orifice central 21b ou de l'un au moins des orifices centraux 21b est surélevé par rapport aux bords supérieurs d'appui 22 des orifices périphériques 21a.

Dans l'exemple de réalisation illustré sur les figures, les orifices 21 comprennent des orifices inférieurs 21c et au moins un orifice supérieur 21d. Le bord supérieur d'appui 22 du ou de chaque orifice supérieur 21d est surélevé par rapport au bord supérieur d'appui de chaque orifice inférieur 21c.

Dans l'exemple de réalisation illustré sur les figures, l'accessoire de support 2 comporte douze orifices 21 recevant douze récipients 4. Si désiré, des couvercles 5 peuvent fermer les récipients 4. Tel que bien visible sur la figure 5, les orifices 21 comprennent dix orifices périphériques 21a entourant deux orifices centraux 21b. Tel que bien visible sur la figure 5, les orifices 21 comprennent dix orifices inférieurs 21c et deux orifices supérieurs 21d. Ainsi les orifices supérieurs 21d sont des orifices centraux 21b, et les orifices inférieurs 21c sont des orifices périphériques 21a.

Plus particulièrement dans l'exemple de réalisation illustré sur les figures, l'accessoire de support 2 comprend un corps principal 6 et un rehausseur 7. Le corps principal 6 présente la majorité des orifices 21. Le corps principal 6 présente les orifices inférieurs 21c. Le rehausseur 7 présente les orifices supérieurs 21d.

Selon une forme de réalisation illustrée sur les figures, le rehausseur 7 est monté amovible par rapport au corps principal 6. Selon une forme de réalisation préférée illustrée sur les figures, le corps principal 6 présente au moins un orifice complémentaire 21e entouré par un bord supérieur d'appui complémentaire 22e. Si désiré, le rehausseur 7 repose sur le ou sur l'un au moins des bord(s) supérieur(s) d'appui complémentaire(s) 22e lorsque le rehausseur 7 est en place sur le corps principal 6. Le ou chaque bord supérieur d'appui complémentaire 22e est prévu pour suspendre un récipient 4 lorsque le rehausseur 7 n'est pas en place sur le corps principal 6. De préférence, les bords supérieurs d'appui 22 et le ou chaque bord supérieur d'appui complémentaire 22e s'étendent au même niveau.

Tel que bien visible sur les figures 3 et 4, le corps principal 6 comporte deux orifices complémentaires 21e présentant chacun un bord supérieur d'appui complémentaire 22e. Chaque bord supérieur d'appui complémentaire 22e présente une échancrure 23.

Le rehausseur 7 présente deux languettes inférieures 7b opposées prévues chacune pour être engagée dans l'un des orifices complémentaires 21e. A cet effet le rehausseur 7 présente deux protubérances 7a, dont l'une est visible sur la figure 4. Chaque protubérance est prévue pour être engagée dans l'une des échancrures 23 lorsque le rehausseur 7 est en place sur le corps principal 6. Chacune des protubérances 7a est ménagée sur l'une des languettes inférieures 7b.

Tel que mieux visible sur les figures 2, 3, 5 et 6, le corps principal 6 comporte un corps tubulaire 26 prévu pour reposer sur la base chauffante 1. A cet effet le corps tubulaire 26 présente une bordure inférieure 27. Le corps tubulaire 26 présente une partie de la surface supérieure 20. Les récipients 4 en place sur l'accessoire de support 2 sont suspendus au-dessus de la base chauffante 1 lorsque la bordure inférieure 27 du corps tubulaire 26 repose sur la base chauffante 1. Tel que visible sur la figure 6, la bordure inférieure 27 repose sur la base chauffante 1 autour de la plaque métallique 10. Si désiré le corps tubulaire 26 peut comporter une couronne 25 amovible par rapport à un plateau formant une partie de la surface supérieure 20.

Tel que visible sur la figure 6, le fond 41 des récipients 4 périphériques dépasse en dessous de l'accessoire de support 2, mais pas le fond 41 des deux récipients 4 centraux surélevés. Les orifices supérieurs 21d recevant les deux récipients 4 centraux surélevés sont agencés entièrement au-dessus de la cavité 11.

L'appareil électrique pour chauffer des aliments en portions séparées comportant l'accessoire de support 2 selon l'invention s'utilise et fonctionne de la manière suivante.

L'utilisateur verse la quantité d'eau désirée dans la cavité 11, puis dispose l'accessoire de support 2 portant les récipients 4 sur la base chauffante 1. A cet effet l''épaulement 4a de chaque récipient 4 vient en appui sur le bord supérieur d'appui 22 de chaque orifice 21. L'utilisateur peut aussi mettre en place l'accessoire de support 2 sur la base chauffante 1, puis les récipients 4 dans les orifices 21 de l'accessoire de support 2. Sur la figure 6 les récipients 4 sont fermés par leur couvercle 5. Si désiré les récipients 4 peuvent être utilisés sans couvercle 5. L'utilisateur peut aussi mettre en place le couvercle principal 3 sur l'accessoire de support 2. L'utilisateur peut verser la préparation alimentaire souhaitée dans les récipients 4 avant et/ou après la mise en place des récipients 4 dans les orifices 21 de l'accessoire de support 2.

L'utilisateur met ensuite en marche l'appareil électrique pour chauffer des aliments en portions séparées, pour alimenter électriquement le dispositif de chauffe 12 et évaporer l'eau contenue dans la cavité 11, pour chauffer les récipients 4 portés par l'accessoire de support 2, ainsi que la préparation alimentaire contenue dans les récipients 4. La vapeur ainsi obtenue peut remplir l'enceinte 9, l'air ou la vapeur pouvant si nécessaire s'échapper de l'enceinte 9 par un des orifices d'échappement de vapeur 28 de l'accessoire de support 2, ou par un des orifices d'échappement de vapeur 30 du couvercle 3 si le couvercle 3 est en place sur l'accessoire de support 2.

Lorsque le rehausseur 7 est en place sur le corps principal 6, les récipients 4 disposés en position centrale sont davantage éloignés de la cavité 11 qu'en l'absence du rehausseur 7. Lorsque le rehausseur 7 est en place sur le corps principal 6, l'espace plus important sous le fond 41 des récipients 4 disposés en position centrale permet de favoriser une diffusion latérale de la vapeur vers le fond 41 des récipients 4 agencés en position périphérique. La vapeur atteint ainsi plus tardivement le fond des récipients 4 agencés en position centrale.

Ces dispositions permettent d'obtenir un appareil électrique pour chauffer des aliments en portions séparées, dans lequel la chauffe des récipients 4 à la vapeur peut être réalisée avec des écarts de température limités entre les récipients 4, notamment dans le cadre d'un processus de fermentation devant être effectué à une température inférieure à 50°C pour éviter de détruire les ferments lactiques, sans nécessiter un dispositif de production de vapeur 8 fournissant un flux de vapeur réparti de manière homogène sous le fond 41 des récipients 4.

Si désiré, l'utilisateur peut retirer le rehausseur 7 du corps principal 6 et mettre en place des récipients 4 dans les orifices complémentaires 21e du corps principal, lorsque la préparation alimentaire à réaliser ne nécessite pas un contrôle précis de la température atteinte par les récipients 4, par l'exemple lors de la réalisation de certaines préparations culinaires nécessitant une cuisson d'aliments. Pour retirer le rehausseur 7 du corps principal 6, l'utilisateur peut exercer une pression à la base de l'une au moins des deux extrémités du rehausseur 7, au-dessus de l'une au moins des languettes inférieures 7b , pour déformer légèrement le rehausseur 7 de manière élastique, et dégager au moins une des protubérances 7a du bord supérieur d'appui complémentaire 22e correspondant, afin d'extraire au moins l'une des languettes inférieures 7b de l'orifice complémentaire 21^{e} correspondant. Pour mettre en place le rehausseur 7, sur le corps principal 6, l'utilisateur peut par exemple mettre en place l'une des protubérances 7a dans l'une des échancrures 23, puis exercer une pression à la base de l'extrémité du rehausseur 7 opposée à la protubérance 7a déjà engagée, pour déformer légèrement le rehausseur 7 de manière élastique, et engager l'autre protubérance 7a dans l'orifice complémentaire 21e correspondant, puis dans l'échancrure 23 correspondante, après relâchement de la déformation élastique du rehausseur 7.

A titre de variante, l'accessoire de support 2 peut comporter un seul orifice central 21b, ou plus de deux orifices centraux 21b.

A titre de variante, l'accessoire de support 2 peut comporter un seul orifice supérieur 21d, ou plus de deux orifices supérieurs 21d.

A titre de variante, le ou chaque orifice supérieur 21d n'est pas nécessairement un orifice central 21b.

A titre de variante, le ou chaque orifice inférieur 21c n'est pas nécessairement un orifice périphérique 21a.

A titre de variante, le ou l'un au moins des orifices supérieurs 21d peut être agencé au moins partiellement au-dessus de la cavité 11, et de préférence être agencé principalement au-dessus de la cavité 11.

A titre de variante, la surface supérieure 20 de l'accessoire de support 2 peut comporter plus de deux niveaux présentant chacun au moins un des orifices 21.

A titre de variante, le rehausseur 7 peut présenter au moins un orifice supérieur 21d.

A titre de variante, le rehausseur 7 peut présenter une protubérance 7a prévue pour être engagée dans une échancrure 23 ménagée dans le bord supérieur d'appui complémentaire 22e lorsque le rehausseur 7 est en place sur le corps principal 6.

A titre de variante, le ou les orifices complémentaires 21e ne sont pas nécessairement prévus pour suspendre un récipient 4, mais peu(ven)t servir à retenir le rehausseur 7 monté sur le corps principal 6.

A titre de variante, l'accessoire de support 2 ne comporte pas nécessairement un rehausseur 7 amovible par rapport à un corps principal 6.

A titre de variante, le dispositif de chauffe 12 peut notamment comporter des moyens de chauffage surfaciques s'étendant en dessous de seulement certains des récipients 4.

A titre de variante, le dispositif de production de vapeur 8 ne comporte pas nécessairement une cavité 11 ménagée dans l'enceinte 9. Le dispositif de production de vapeur 8 peut notamment comporter au moins une sortie de vapeur débouchant en dessous d'au moins un des récipients 4 et/ou entre certains des récipients 4.

La présente invention n'est nullement limitée à l'exemple de réalisation décrit et à ses variantes, mais englobe de nombreuses modifications dans le cadre des revendications.

## Revendications

1. Appareil électrique pour chauffer des aliments en portions séparées, comprenant une base chauffante (1) comportant un dispositif de production de vapeur (8), des récipients (4) pour contenir les aliments à chauffer, et un accessoire de support (2) pour suspendre les récipients (4) de sorte que le fond (41) de chaque récipient (4) soit distant de la base chauffante (1) lorsque la base chauffante (1) porte l'accessoire de support (2), la base chauffante (1) et l'accessoire de support (2) formant une enceinte (9) susceptible de contenir de la vapeur issue du dispositif de production de vapeur (8), l'accessoire de support (2) comprenant une surface supérieure (20) présentant plusieurs orifices (21), chaque orifice (21) traversant l'accessoire de support (2), chaque orifice (21) étant entouré par un bord supérieur d'appui (22), chaque bord supérieur d'appui (22) étant prévu pour suspendre un récipient (4), **caractérisé en ce que** les bords supérieurs d'appui (22) s'étendent à différents niveaux de la surface supérieure (20).

2. Appareil électrique pour chauffer des aliments en portions séparées selon la revendication 1, **caractérisé en ce que** les orifices (21) comprennent des orifices périphériques (21a) et au moins un orifice central (21b) entouré par les orifices périphériques (21a).

3. Appareil électrique pour chauffer des aliments en portions séparées selon la revendication 2, **caractérisé en ce que** le bord supérieur d'appui (22) de l'orifice central (21b) ou de l'un au moins des orifices centraux (21b) est surélevé par rapport aux bords supérieurs d'appui (22) des orifices périphériques (21a).

4. Appareil électrique pour chauffer des aliments en portions séparées selon l'une des revendications 2 ou 3, **caractérisé en ce que** les orifices (21) comprennent au moins six orifices périphériques (21a) entourant au moins un orifice central (21b), et de préférence dix orifices périphériques (21a) entourant deux orifices centraux (21b).

5. Appareil électrique pour chauffer des aliments en portions séparées selon l'une des revendications 1 à 4, **caractérisé en ce que** les orifices (21) comprennent des orifices inférieurs (21c) et au moins un orifice supérieur (21d), le bord supérieur d'appui (22) du ou de chaque orifice supérieur (21d) étant surélevé par rapport au bord supérieur d'appui de chaque orifice inférieur (21c).

6. Appareil électrique pour chauffer des aliments en portions séparées selon la revendication 5, **caractérisé en ce qu'**il comprend un corps principal (6) présentant les orifices inférieurs (21c) et un rehausseur (7) présentant ledit au moins un orifice supérieur (21d).

7. Appareil électrique pour chauffer des aliments en portions séparées selon la revendication 6, **caractérisé en ce que** le corps principal (6) présente la majorité des orifices (21).

8. Appareil électrique pour chauffer des aliments en portions séparées selon l'une des revendications 6 ou 7, **caractérisé en ce que** le rehausseur (7) est monté amovible par rapport au corps principal (6).

9. Appareil électrique pour chauffer des aliments en portions séparées selon la revendication 8, **caractérisé en ce que** le corps principal (6) présente au moins un orifice complémentaire (21e) entouré par un bord supérieur d'appui complémentaire (22e) prévu pour suspendre un récipient (4) lorsque le rehausseur (7) n'est pas en place sur le corps principal (6).

10. Appareil électrique pour chauffer des aliments en portions séparées selon la revendication 9, **caractérisé en ce que** le rehausseur (7) repose sur le bord supérieur d'appui complémentaire (22e) lorsque le rehausseur (7) est en place sur le corps principal (6).

11. Appareil électrique pour chauffer des aliments en portions séparées selon l'une des revendications 9 ou 10, **caractérisé en ce que** le rehausseur (7) présente une protubérance (7a) prévue pour être engagée dans une échancrure (23) ménagée dans le bord supérieur d'appui complémentaire (22e) lorsque le rehausseur (7) est en place sur le corps principal (6).

12. Appareil électrique pour chauffer des aliments en portions séparées selon la revendication 9, **caractérisé en ce que** le corps principal (6) comporte deux orifices complémentaires (21e) présentant chacun un bord supérieur d'appui complémentaire (22e) présentant une échancrure (23), et **en ce que** le rehausseur (7) présente deux protubérances (7a) prévues chacune pour être engagée dans l'une des échancrures (23) lorsque le rehausseur (7) est en place sur le corps principal (6).

13. Appareil électrique pour chauffer des aliments en portions séparées selon la revendication 5, **caractérisé en ce que** le dispositif de production de vapeur (8) comprend une cavité (11) prévue pour recevoir de l'eau, un dispositif de chauffe (12) pour porter à ébullition l'eau contenue dans la cavité (11), la cavité (11) étant ménagée dans l'enceinte (9), le ou l'un au moins des orifices supérieurs (21d) étant agencé au moins partiellement au-dessus de la cavité (11), et de préférence principalement ou entièrement au-dessus de la cavité (11).

14. Appareil électrique pour chauffer des aliments en portions séparées selon l'une des revendications 1 à 13, **caractérisé en ce qu'**il forme une yaourtière.

## Patentansprüche

1. Elektrische Einrichtung zum Erhitzen von Lebensmitteln in getrennten Portionen, eine Heizbasis (1) umfassend, die eine Vorrichtung zum Erzeugen von Dampf (8), Behälter (4) zum Enthalten der zu erhitzenden Lebensmittel und ein Stützzubehör (2) zum Aufhängen der Behälter (4) beinhaltet, sodass der Boden (41) eines jeden Behälters (4) von der Heizbasis (1) beabstandet ist, wenn die Heizbasis (1) das Stützzubehör (2) trägt, wobei die Heizbasis (1) und das Stützzubehör (2) eine Einschließung (9) bilden, die in der Lage ist, Dampf zu enthalten, der aus der Vorrichtung zum Erzeugen von Dampf (8) stammt, wobei das Stützzubehör (2) eine obere Oberfläche (20), die mehrere Öffnungen (21) aufweist, umfasst, wobei jede Öffnung (21) das Stützzubehör (2) durchquert, jede Öffnung (21) von einem oberen Abstützrand (22) umgeben ist, wobei jeder obere Abstützrand (22) vorgesehen ist, um einen Behälter (4) aufzuhängen, **dadurch gekennzeichnet, dass** sich die oberen Abstützränder (22) auf unterschiedlichen Niveaus der oberen Oberfläche (20) erstrecken.

2. Elektrische Einrichtung zum Erhitzen von Lebensmitteln in getrennten Portionen nach Anspruch 1, **dadurch gekennzeichnet, dass** die Öffnungen (21) umlaufende Öffnungen (21a) und mindestens eine zentrale Öffnung (21b) umfassen, die von den umlaufenden Öffnungen (21a) umgeben ist.

3. Elektrische Einrichtung zum Erhitzen von Lebensmitteln in getrennten Portionen nach Anspruch 2, **dadurch gekennzeichnet, dass** der obere Abstützrand (22) der zentralen Öffnung (21b) oder mindestens einer der zentralen Öffnungen (21b) in Bezug auf die oberen Abstützränder (22) der umlaufenden Öffnungen (21a) erhöht ist.

4. Elektrische Einrichtung zum Erhitzen von Lebensmitteln in getrennten Portionen nach einem der Ansprüche 2 oder 3, **dadurch gekennzeichnet, dass** die Öffnungen (21) mindestens sechs umlaufende Öffnungen (21a) umfassen, die mindestens eine zentrale Öffnung (21b) umgeben, und vorzugsweise zehn umlaufende Öffnungen (21a), die zwei zentrale Öffnungen (21b) umgeben.

5. Elektrische Einrichtung zum Erhitzen von Lebensmitteln in getrennten Portionen nach einem der Ansprüche 1 bis 4, **dadurch gekennzeichnet, dass** die Öffnungen (21) untere Öffnungen (21c) und mindesten eine obere Öffnung (21d) umfassen, wobei der obere Abstützrand (22) der oder jeder oberen Öffnung (21d) in Bezug auf den oberen Abstützrand jeder unteren Öffnung (21c) erhöht ist.

6. Elektrische Einrichtung zum Erhitzen von Lebensmitteln in getrennten Portionen nach Anspruch 5, **dadurch gekennzeichnet, dass** sie einen Hauptkörper (6) umfasst, der die unteren Öffnungen (21c) aufweist, und eine Erhöhung (7), die die mindestens eine obere Öffnung (21d) aufweist.

7. Elektrische Einrichtung zum Erhitzen von Lebensmitteln in getrennten Portionen nach Anspruch 6, **dadurch gekennzeichnet, dass** der Hauptkörper (6) die Mehrzahl der Öffnungen (21) aufweist.

8. Elektrische Einrichtung zum Erhitzen von Lebensmitteln in getrennten Portionen nach einem der Ansprüche 6 oder 7, **dadurch gekennzeichnet, dass** die Erhöhung (7) in Bezug auf den Hauptkörper (6) lösbar montiert ist.

9. Elektrische Einrichtung zum Erhitzen von Lebensmitteln in getrennten Portionen nach Anspruch 8, **dadurch gekennzeichnet, dass** der Hauptkörper (6) mindestens eine ergänzende Öffnung (21e) aufweist, die von einem ergänzenden oberen Abstützrand (22e) umgeben ist, der vorgesehen ist, um einen Behälter (4) aufzuhängen, wenn die Erhöhung (7) nicht auf dem Hauptkörper (6) angebracht ist.

10. Elektrische Einrichtung zum Erhitzen von Lebensmitteln in getrennten Portionen nach Anspruch 9, **dadurch gekennzeichnet, dass** die Erhöhung (7) auf dem ergänzenden oberen Abstützrand (22e) aufliegt, wenn die Erhöhung (7) auf dem Hauptkörper (6) angebracht ist.

11. Elektrische Einrichtung zum Erhitzen von Lebensmitteln in getrennten Portionen nach einem der Ansprüche 9 oder 10, **dadurch gekennzeichnet, dass** die Erhöhung (7) einen Vorsprung (7a) aufweist, der vorgesehen ist, in eine Aussparung (23) eingeführt zu werden, die am ergänzenden oberen Abstützrand (22e) vorgesehen ist, wenn die Erhöhung (7) auf dem Hauptkörper (6) angebracht ist.

12. Elektrische Einrichtung zum Erhitzen von Lebensmitteln in getrennten Portionen nach Anspruch 9, **dadurch gekennzeichnet, dass** der Hauptkörper (6) zwei ergänzende Öffnungen (21e) beinhaltet, die jeweils einen ergänzenden oberen Abstützrand (22e) aufweisen, der eine Aussparung (23) aufweist, und dadurch, dass die Erhöhung (7) zwei Vorsprünge (7a) aufweist, die jeweils vorgesehen sind, um in die eine der Aussparungen (23) eingeführt zu werden, wenn die Erhöhung (7) auf dem Hauptkörper (6) angebracht ist.

13. Elektrische Einrichtung zum Erhitzen von Lebensmitteln in getrennten Portionen nach Anspruch 5, **dadurch gekennzeichnet, dass** die Vorrichtung zum Erzeugen von Dampf (8) einen Hohlraum (11) umfasst, der vorgesehen ist, um Wasser aufzunehmen, eine Heizvorrichtung (12) um das im Hohlraum (11) enthaltene Wasser zum Sieden zu bringen, wobei der Hohlraum (11) in der Einschließung (9) vorgesehen ist, wobei die oder mindestens eine der oberen Öffnungen (21d) mindestens teilweise oberhalb des Hohlraums (11), und vorzugsweise hauptsächlich oder vollkommen oberhalb des Hohlraums (11) angeordnet ist.

14. Elektrische Einrichtung zum Erhitzen von Lebensmitteln in getrennten Portionen nach einem der Ansprüche 1 bis 13, **dadurch gekennzeichnet, dass** sie einen Joghurtbereiter bildet.

## Claims

1. Electrical apparatus for heating food divided into separate portions, comprising a heating base (1) comprising a steam-producing device (8), containers (4) for containing food to be heated, and a support accessory (2) for suspending the container (4) such that the bottom (41) of each container (4) is distant from the heating base (1) when the heating base (1) carries the support accessory (2), the heating base (1) and the support accessory (2) forming a chamber (9) which can contain steam from the steam-producing device (8), the support accessory (2) comprising an upper surface (20) having several orifices (21), each orifice (21) passing through the support accessory (2), each orifice (21) being surrounded by an upper support edge (22), each upper support edge (22) being provided to suspend a container (4), **characterised in that** the upper support edges (22) extend at different levels of the upper surface (20).

2. Electrical apparatus for heating food divided into separate portions according to claim 1, **characterised in that** the orifices (21) comprise peripheral orifices (21a) and at least one central orifice (21b) surrounded by the peripheral orifices (21a).

3. Electrical apparatus for heating food divided into separate portions according to claim 2, **characterised in that** the upper support edge (22) of the central orifice (21b) or of the at least one of the central orifices (21b) is raised with respect to the upper support edges (22) of the peripheral orifices (21a).

4. Electrical apparatus for heating food divided into separate portions according to one of claims 2 or 3, **characterised in that** the orifices (21) comprise at least six peripheral orifices (21a) surrounding at least one central orifice (21b), and preferably ten peripheral orifices (21a) surrounding two central orifices (21b).

5. Electrical apparatus for heating food divided into separate portions according to one of claims 1 to 4, **characterised in that** the orifices (21) comprise lower orifices (21c) and at least one upper orifice (21d), the upper support edge (22) of the or of each upper orifice (21d) being raised with respect to the upper support edge of each lower orifice (21c).

6. Electrical apparatus for heating food divided into separate portions according to claim 5, **characterised in that** it comprises a main body (6) having the lower orifices (21c) and a booster (7) having said at least one upper orifice (21d).

7. Electrical apparatus for heating food divided into separate portions according to claim 6, **characterised in that** the main body (6) has most of the orifices (21).

8. Electrical apparatus for heating food divided into separate portions according to one of claims 6 or 7, **characterised in that** the booster (7) is removably mounted with respect to the main body (6).

9. Electrical apparatus for heating food divided into separate portions according to claim 8, **characterised in that** the main body (6) has at least one complementary orifice (21e) surrounded by a complementary upper support edge (22e) provided to suspend a container (4) when the booster (7) is not in place on the main body (6).

10. Electrical apparatus for heating food divided into separate portions according to claim 9, **characterised in that** the booster (7) rests on the complementary upper support edge (22e) when the booster (7) is in place on the main body (6).

11. Electrical apparatus for heating food divided into separate portions according to one of claims 9 or 10, **characterised in that** the booster (7) has a protrusion (7a) provided to be engaged in an indentation (23) arranged in the complementary upper support edge (22e) when the booster (7) is in place on the main body (6).

12. Electrical apparatus for heating food divided into separate portions according to claim 9, **characterised in that** the main body (6) comprises two complementary orifices (21e) each having a complementary upper support edge (22e) having an indentation (23), and **in that** the booster (7) has two protrusions (7a) each provided to be engaged in one of the indentations (23) when the booster (7) is in place on the main body (6).

13. Electrical apparatus for heating food divided into separate portions according to claim 5, **characterised in that** the stream-producing device (8) comprises a cavity (11) provided to receive water, a heating device (12) for bringing the water contained in the cavity (11) to the boil, the cavity (11) being arranged in the chamber (9), the or at least one of the upper orifices (21d) being arranged at least partially above the cavity (11), and preferably mainly or fully above the cavity (11).

14. Electrical apparatus for heating food divided into separate portions according to one of claims 1 to 13, **characterised in that** it forms a yogurt maker.
